# EUROPEAN PATENT APPLICATION

(11) **EP 4 825 519 A1**
(43) Date of publication of application: **21.10.2026**
(21) Application number: 24914840.4
(22) Date of filing: 21.08.2024
(51) Int. Cl.: B23K 20/00, B23K 20/10, H01M 10/04, B23K 37/047

(54) **BATTERY WELDING APPARATUS AND BATTERY WELDING METHOD**

(30) Priority: 02.01.2024 CN 202410004820
(71) Applicant: Contemporary Amperex Technology Co., Limited, Ningde, Fujian 352100 (CN)
(72) Inventor: SHI, Deqiang, Ningde, Fujian 352100 (CN); LAN, Bin, Ningde, Fujian 352100 (CN); WU, Runqi, Ningde, Fujian 352100 (CN)
(74) Representative: Kraus & Lederer PartGmbB
(86) International application number: PCT/CN2024/113776
(87) International publication number: WO 2025/145618

(57) **Abstract**

Provided in the present application are a battery welding apparatus and a battery welding method. The battery welding apparatus includes a conveyor line, a cell feeding device, a connecting piece feeding device, and a welding device. The conveyor line includes a plurality of carriers arranged in a conveying direction of the conveyor line. The cell feeding device includes at least two cell feeding mechanisms; the at least two cell feeding mechanisms are respectively configured to feed at least two battery cell sets into at least two target carriers of the conveyor line, and each of the battery cell sets includes at least two cells. The connecting piece feeding device is configured to feed connecting pieces into the at least two target carriers. The welding device is arranged on a lateral side of the conveyor line. The conveyor line is movably arranged to sequentially convey the at least two target carriers to the welding device for welding. The welding device is configured to weld the connecting pieces and the at least two cells in the target carrier. The battery welding apparatus of the present application improves the welding efficiency.

## Description

### CROSS-REFERENCE TO RELATED APPLICATION

The present application claims priority to Chinese Patent Application No. 202410004820.1 filed on January 2, 2024 and entitled "BATTERY WELDING APPARATUS AND BATTERY WELDING METHOD", the content of which is incorporated herein by reference in its entirety.

### TECHNICAL FIELD

The present application relates to the technical field of battery production, and in particular, to a battery welding apparatus and a battery welding method.

### BACKGROUND

As new energy vehicles enter a stage of rapid development, the demand for power batteries is also increasing day by day. To meet the demand for power batteries, the production efficiency of the battery production line is to be improved. As an important apparatus in the battery production line, the improvement of the production efficiency of the battery welding apparatus is very important for the increase in the battery production volume. Therefore, how to improve the welding efficiency of batteries is a problem that requires to be urgently solved.

### SUMMARY

In view of the above problem, the present application provides a battery welding apparatus and a battery welding method to improve the welding efficiency of batteries.

A first aspect of the present application provides a battery welding apparatus. The battery welding apparatus includes a conveyor line, a cell feeding device, a connecting piece feeding device, and a welding device. The conveyor line includes a plurality of carriers arranged in a conveying direction of the conveyor line. The cell feeding device includes at least two cell feeding mechanisms, where the at least two cell feeding mechanisms are respectively configured to feed at least two battery cell sets into at least two target carriers of the conveyor line, and each of the battery cell sets includes at least two cells. The connecting piece feeding device is configured to feed connecting pieces into the at least two target carriers. The welding device is arranged on a lateral side of the conveyor line. The conveyor line is movably arranged to sequentially convey the at least two target carriers to the welding device for welding. The welding device is configured to weld the connecting pieces and the at least two cells in the target carrier.

The cell feeding device of the battery welding apparatus in the embodiments of the present application includes at least two cell feeding mechanisms. In this way, at least two battery cell sets are simultaneously fed into at least two target carriers of the conveyor line, and then the conveyor line sequentially conveys the at least two target carriers loaded with the at least two battery cell sets to the position of the welding device, such that the at least two battery cell sets are allowed to be simultaneously welded by the welding device, thereby improving the welding efficiency. Moreover, the conveyor line of the battery welding apparatus in the embodiments of the present application is provided with a plurality of carriers, such that the buffer capacity is increased, thereby improving the fault tolerance of the apparatus.

In some embodiments, the battery welding apparatus includes two welding devices spaced apart from each other in the conveying direction of the conveyor line, and the two welding devices include a first welding device and a second welding device; the first welding device is configured to weld first tabs of the at least two cells, the second welding device is configured to weld second tabs of the at least two cells, and the first tabs and the second tabs have opposite polarities.

The battery welding apparatus in the embodiments of the present application includes two welding devices spaced apart from each other in the conveying direction of the conveyor line, such that after the connecting pieces and the battery cell sets are fed onto the target carriers, the target carriers are conveyed forward by the conveyor line to be sequentially welded by the two welding devices, thereby further improving the welding efficiency.

In some embodiments, the first welding device includes a copper welding device; and/or, the second welding device includes an aluminum welding device.

The two welding devices in the embodiments of the present application include a copper welding device and an aluminum welding device. The copper welding device is configured to weld first tabs of at least two cells, and the aluminum welding device is configured to weld second tabs of the at least two cells, such that as long as a target carrier carrying the at least two cells is conveyed along the conveyor line, the connection of the two tabs of the at least two cells is achieved, thereby improving the efficiency.

In some embodiments, the connecting piece feeding device is configured to feed two connecting pieces into each target carrier; one of the two connecting pieces is configured to connect to the first tabs of the at least two cells by the first welding device, and the other of the two connecting pieces is configured to connect to the second tabs of the at least two cells by the second welding device.

The connecting piece feeding device in the embodiments of the present application feeds two connecting pieces for each target carrier to respectively connect to positive electrodes and negative electrodes of the at least two cells, thereby achieving the grouping of the at least two cells, completing the feeding of the connecting pieces at one time, and improving the production efficiency.

In some embodiments, each of the welding devices includes a first welding assembly and a second welding assembly arranged adjacent to each other, and the target carrier sequentially passes through the first welding assembly and the second welding assembly under the conveyance of the conveyor line, such that the first tabs and the second tabs of the at least two cells are each welded twice.

In this way, when the target carrier passes through the first welding device under the conveyance of the conveyor line, the target carrier sequentially passes through the two welding assemblies for two welding operations. Specifically, the first tabs of the at least two cells and the connecting pieces first undergo a first welding performed by one welding assembly, and then undergo a second welding performed by the other welding assembly, such that the negative electrode of the battery is welded twice, thereby improving the welding yield and reducing the number of defective batteries caused by poor welding. Similarly, when the target carrier passes through the second welding device under the conveyance of the conveyor line, the target carrier also sequentially passes through the two welding assemblies for two welding operations. Specifically, the second tabs of the at least two cells and the connecting pieces first undergo a first welding performed by one welding assembly, and then undergo a second welding performed by the other welding assembly, such that the positive electrode of the battery is welded twice, thereby improving the welding yield and reducing the number of defective batteries caused by poor welding.

In some embodiments, the first welding assembly includes at least two independently arranged welding machines, and the at least two welding machines are arranged corresponding to the at least two target carriers to weld the at least two battery cell sets in the at least two target carriers, respectively; and/or, the second welding assembly includes at least two independently arranged welding machines, and the at least two welding machines are arranged corresponding to the at least two target carriers to weld the at least two battery cell sets in the at least two target carriers, respectively.

The first welding assembly in the embodiments of the present application is provided with at least two welding machines corresponding to the number of the battery cell sets, such that after the conveyor line conveys the at least two battery cell sets to the welding device, the at least two welding machines operate simultaneously to simultaneously perform a first welding on the at least two battery cell sets, thereby further improving the efficiency.

In some embodiments, the conveyor line includes an annular conveyor line.

The conveyor line in the embodiments of the present application includes an annular conveyor line. In this way, the target carrier is docked with the plurality of devices under the conveyance of the conveyor line. The conveying direction of the conveyor line remains consistent, eliminating reciprocating motion during the manufacturing process and avoiding idle time caused by delayed process completion, thereby greatly improving efficiency.

In some embodiments, the conveyor line includes a first conveyor section and a second conveyor section arranged opposite to and spaced apart from each other, and a third conveyor section for connecting the first conveyor section and the second conveyor section; the battery welding apparatus includes two welding devices spaced apart from each other in the conveying direction of the conveyor line; the two welding devices are respectively configured to weld first tabs and second tabs of the at least two cells; one of the two welding devices is arranged on a lateral side of the first conveyor section, and the other of the two welding devices is arranged on a lateral side of the second conveyor section.

The third conveyor section is arranged between the first conveyor section and the second conveyor section, such that after the battery cell set undergoes welding by the first welding device on the first conveyor section, the battery cell set will be directly conveyed to the second conveyor section by the third conveyor section to undergo welding by the second welding device. Such an arrangement ensures that the welding process of the battery cell set does not require transfer and requires only the control of the conveying action of the conveyor line, resulting in a simple control process.

In some embodiments, the conveyor line further includes a fourth conveyor section arranged opposite to the third conveyor section; the first conveyor section, the third conveyor section, the second conveyor section, and the fourth conveyor section are sequentially connected to form a closed annular conveyor line.

The conveyor line forms a closed annular conveyor line, such that after a carrier carrying the battery cell set completes welding and is discharged, the empty carrier continues to be conveyed by the conveyor line back to a receiving position. Subsequently, the connecting piece feeding device and the cell feeding device continue to feed materials into the empty carrier, such that the battery welding apparatus in the embodiments of the present application is enabled to operate continuously, thereby improving the operation efficiency.

In some embodiments, the battery welding apparatus further includes a cell discharging device, and the cell discharging device is docked with the conveyor line to discharge a welded battery cell set.

The cell discharging device is docked with the conveyor line to discharge the welded battery cell set. In this way, the battery welding apparatus in the embodiments of the present application is enabled to cover the entire process of feeding, welding, and discharging.

In some embodiments, the battery welding apparatus includes at least two cell discharging devices, and the at least two cell discharging devices are spaced apart from each other in the conveying direction of the conveyor line to discharge welded battery cell sets in the at least two target carriers.

The battery welding apparatus in the embodiments of the present application includes at least two target carriers. Therefore, the battery welding apparatus in the embodiments of the present application is provided with at least two cell discharging devices so that the battery cell sets in the at least two target carriers are all discharged under the conveyance of the conveyor line.

In some embodiments, the connecting piece feeding device includes a connecting piece conveying device, a connecting piece storage device, and a gripping device. The connecting piece conveying device is configured to convey a plurality of connecting pieces onto the connecting piece storage device, and the gripping device is configured to grip a connecting piece from the connecting piece storage device and place the connecting piece into the target carrier.

A second aspect of the present application provides a battery welding method based on the above battery welding apparatus. The battery welding method includes the following steps:
feeding a plurality of connecting pieces into at least two target carriers;
correspondingly feeding at least two battery cell sets into at least two target carriers, each battery cell set including at least two cells;
controlling the conveyor line to act to sequentially convey the at least two target carriers to a welding device; and
controlling the welding device to operate to weld the connecting pieces and the at least two cells in the target carrier.

According to the battery welding method in the embodiments of the present application, at least two battery cell sets are fed into at least two target carriers of the conveyor line, and then the conveyor line will sequentially convey the at least two target carriers loaded with the at least two battery cell sets to the position of the welding device, such that the at least two battery cell sets are allowed to be sequentially welded by the welding device, thereby improving the welding efficiency.

In some embodiments, the battery welding method further includes: detecting, before controlling the conveyor line to act to convey the at least two target carriers to the welding device, whether a battery cell set is placed in the target carrier; and controlling, if it is detected that the battery cell set is placed in the target carrier, the conveyor line to act; or first controlling, if it is detected that no battery cell set is placed in the target carrier, a cell feeding mechanism to feed the battery cell set into the target carrier and then controlling the conveyor line to convey the target carrier.

Detecting whether the battery cell set is placed in the target carrier ensures that the battery cell set and the connecting piece simultaneously exist in the target carrier conveyed to the welding device, thereby ensuring the smooth progress of welding. In this way, repeated rework caused by missing placement is avoided, thereby improving the operation efficiency.

In some embodiments, the battery welding apparatus includes a first welding device and a second welding device spaced apart from each other in a conveying direction of the conveyor line. Controlling the conveyor line to convey the at least two target carriers to the welding device for welding, where the welding device is configured to weld the connecting pieces and the at least two cells in the target carrier, includes: controlling the conveyor line to convey the at least two target carriers to the first welding device and controlling the first welding device to operate to weld first tabs of the at least two cells in the target carrier, and then controlling the conveyor line to convey the at least two target carriers to the second welding device and controlling the second welding device to operate to weld second tabs of the at least two cells in the target carrier.

According to the battery welding method in the embodiments of the present application, after the connecting pieces and the battery cell sets are fed onto the target carriers, the target carriers are conveyed forward by the conveyor line to be sequentially welded by the two welding devices, thereby further improving the welding efficiency.

In some embodiments, each of the welding devices includes a first welding assembly and a second welding assembly arranged adjacent to each other, and controlling the welding device to operate to weld the connecting pieces and the at least two cells in the target carrier includes: controlling the target carrier, under the conveyance of the conveyor line, to sequentially pass through the first welding assembly and the second welding assembly, such that first tabs and/or second tabs of the at least two cells are each welded twice.

According to the battery welding method in the embodiments of the present application, the first tabs and the second tabs of the battery cell set are each welded twice, thereby improving the welding yield and reducing the number of defective batteries caused by poor welding.

The above description is only an overview of the technical solutions of the present application. To more clearly understand the technical means of the present application to enable implementation in accordance with the content of the specification and to make the above and other purposes, features, and advantages of the present application more obvious and easy to understand, the detailed description of the present application is provided below.

### BRIEF DESCRIPTION OF THE DRAWINGS

To more clearly illustrate the technical solutions according to embodiments of the present application, the drawings required for illustrating the embodiments of the present application are briefly described below. Apparently, the drawings in the following description illustrate merely some embodiments of the present application, and those of ordinary skill in the art may still derive other drawings from these drawings without creative efforts.
FIG. 1 is a schematic structural diagram of a battery welding apparatus according to some embodiments of the present application;
FIG. 2 is a schematic diagram of a connecting piece feeding device according to some embodiments of the present application;
FIG. 3 is a schematic structural diagram of a cell feeding device according to some embodiments of the present application;
FIG. 4 is a schematic structural diagram of a welding machine according to some embodiments of the present application; and
FIG. 5 is a schematic diagram of steps of a battery welding method according to some embodiments of the present application.

The drawings are not drawn to scale.

Description of the reference numerals:
conveyor line 300, first conveyor section 310, second conveyor section 320, third conveyor section 330, fourth conveyor section 340;
connecting piece feeding device 100, connecting piece conveying device 1001, connecting piece storage device 1002, gripping device 1003, positioning mechanism 1004, connecting piece feeding mechanism 1005;
cell feeding device 200, first transfer mechanism 2001, transfer gripper 20011, transfer lead screw 20012, transfer movement mechanism 20013, second transfer mechanism 2002, transfer platform 2003, first cell feeding mechanism 2004, feeding gripper 20041, feeding lead screw 20042, feeding movement mechanism 20043, second cell feeding mechanism 2005;
welding device 400, first welding device 400a, second welding device 400b, first welding assembly 410, second welding assembly 420, welding machine 411, moving device 4111, first guide rail 41111, second guide rail 41112, carrying seat 41113, welding machine body 4112, welding head 41121, telescopic cylinder 41122;
cell discharging device 600, first cell discharging device 600a, second cell discharging device 600b.

### DETAILED DESCRIPTION

Unless otherwise defined, all technical and scientific terms used herein have the same meaning as commonly understood by those skilled in the technical field to which the present application belongs. The terms used herein are only used to illustrate the specific embodiments, rather than limit the present application. The terms "include", "comprise", "have", and "provided with", and any variants thereof in the specification and claims of the present application and the above description of the drawings are intended to cover nonexclusive inclusions.

In the description of the embodiments of the present application, the technical terms such as "first" and "second" are only used to distinguish different objects and should not be interpreted as indicating or implying the relative importance or implicitly indicating the number, specific order, or priority of the technical features referred to. In the description of the embodiments of the present application, unless otherwise specifically defined, "plurality of" means two or more.

Reference in the present application to "embodiment" means that a particular feature, structure, or characteristic described in combination with the embodiment may be included in at least one embodiment of the present application. The references of the word in the context of the specification do not necessarily refer to the same embodiment, nor to separate or alternative embodiments exclusive of other embodiments. It will be explicitly and implicitly understood by those skilled in the art that the embodiments described herein may be combined with other embodiments.

In the description of the embodiments of the present application, the term "and/or" is merely a way to describe the association relationship between associated objects, indicating that there are three possible relationships. For example, "A and/or B" may denote: the presence of A alone, the simultaneous presence of A and B, and the presence of B alone. In addition, the character "/" herein generally indicates an "or" relationship between the associated objects before and after the "/".

In the description of the embodiments of the present application, the term "plurality of" refers to two or more (including two). Similarly, "plurality of sets" refers to two or more (including two) sets, and "plurality of pieces" refers to two or more (including two) pieces.

In the description of the embodiments of the present application, the technical terms "center", "longitudinal", "transverse", "length", "width", "thickness", "upper", "lower", "front", "rear", "left", "right", "vertical", "horizontal", "top", "bottom", "inner", "outer", "clockwise", "counterclockwise", "axial", "radial", "circumferential", and the like indicate orientations or positional relationships based on those shown in the drawings. They are merely for the convenience of describing the embodiments of the present application and simplifying the description, rather than indicating or implying that the device or element referred to must have a specific orientation or be constructed and operated in the specific orientation, and thus should not be construed as a limitation to the embodiments of the present application.

In the description of the embodiments of the present application, unless otherwise clearly specified and defined, the technical terms "mount", "interconnect", "connect", "fix", and the like should be interpreted in their broad senses. For example, they may be a fixed connection, a detachable connection, or an integral connection; a mechanical connection or an electrical connection; or a direct connection, an indirect connection via an intermediate, a communication between interiors of two elements, or an interaction between two elements. For those of ordinary skill in the art, the specific meanings of the above terms in the embodiments of the present application may be interpreted according to specific conditions.

At present, judging from the trends in the market, the application of power batteries is becoming increasingly widespread. Power batteries are not only applied in energy storage power systems, such as hydropower, thermal power, wind power, and solar power stations, but also widely applied in electric transportation vehicles, such as electric bicycles, electric motorcycles, or electric vehicles, as well as in military equipment, aerospace, and other fields. With the continuous expansion of the application field of power batteries, the market demand for power batteries is also constantly increasing. To meet the market demand, the production efficiency of batteries is to be improved.

A battery generally includes a housing, an end cover, and a cell accommodated in the housing. To increase the capacity of the battery, at least two cells are provided in the housing of the battery. During the manufacturing process of the battery, a connecting piece will be connected to tabs of the at least two cells to connect the at least two cells into a set, and then the set is placed into the housing to form the battery.

In the description of the embodiments of the present application, the cell refers to an electrode assembly. The electrode assembly is a component where the electrochemical reaction occurs in the battery. The electrode assembly is mainly formed by winding or stacking a positive electrode plate and a negative electrode plate, and a separator is usually disposed between the positive electrode plate and the negative electrode plate. The portions of the positive electrode plate and the negative electrode plate that contain the active substance constitute the main body part of the electrode assembly, and the portions of the positive electrode plate and the negative electrode plate that do not contain the active substance each constitute a tab. During the charging and discharging processes of the battery, the positive electrode active substance and the negative electrode active substance react with the electrolyte, and the tabs are electrically connected to the post terminal to form a current circuit.

In the related art, a battery welding apparatus is generally utilized to weld a connecting piece and tabs of at least two cells. However, the production capacity of the battery welding apparatus in the related art is limited, resulting in relatively low battery welding efficiency.

To address this problem, the present application provides a battery welding apparatus. A cell feeding device of the battery welding apparatus includes at least two cell feeding mechanisms. The at least two cell feeding mechanisms are capable of feeding at least two battery cell sets, thereby improving the processing capacity of the battery welding apparatus in the embodiments of the present application and improving the welding efficiency.

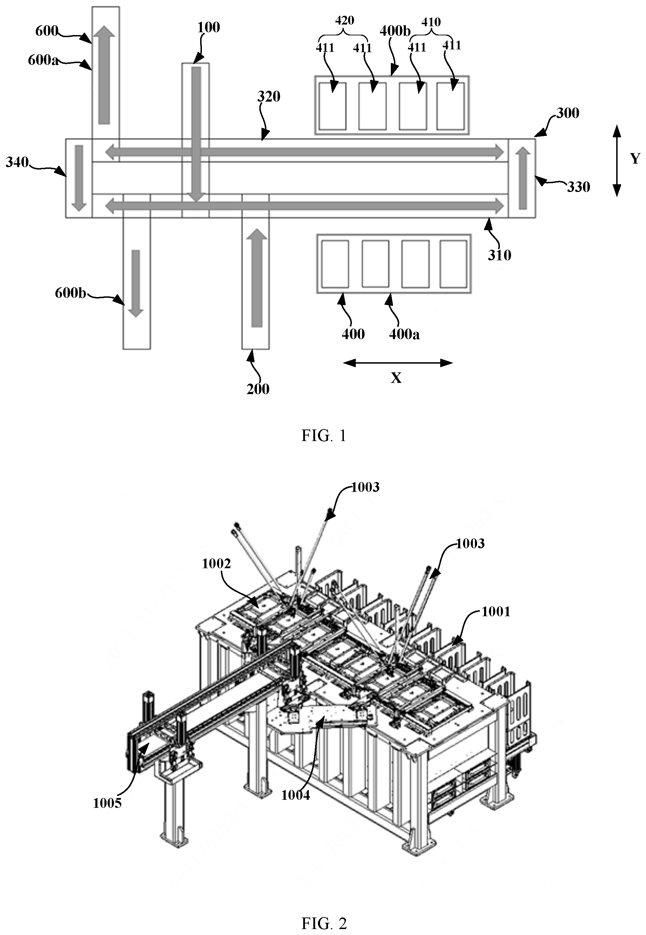

Hereinafter, with reference to FIGs. 1 to 5, the structure of the battery welding apparatus and a battery welding method using the battery welding apparatus according to the embodiments of the present application will be described in detail.

Referring to FIG. 1, some embodiments of the present application provide a battery welding apparatus. The battery welding apparatus includes a conveyor line 300, a cell feeding device 200, a connecting piece feeding device 100, and a welding device 400. The conveyor line 300 includes a plurality of carriers arranged in a conveying direction of the conveyor line. The cell feeding device 200 includes at least two cell feeding mechanisms. The at least two cell feeding mechanisms are respectively configured to feed at least two battery cell sets into at least two target carriers of the conveyor line 300, and each battery cell set includes at least two cells. The connecting piece feeding device 100 is configured to feed the connecting piece into the at least two target carriers. The welding device 400 is arranged on a lateral side of the conveyor line 300. The conveyor line 300 is movably arranged to sequentially convey the at least two target carriers to the welding device 400 for welding. The welding device 400 is configured to weld the connecting pieces and the at least two cells in the target carrier.

The conveyor line 300 includes a plurality of carriers arranged in a conveying direction of the conveyor line. The plurality of carriers are spaced apart from each other on the conveyor line 300. The conveyor line 300 is movably arranged to drive the plurality of carriers thereon to be conveyed forward together along the conveying direction. The carrier refers to a carrier body configured to clamp or place the cells and/or the connecting pieces. In some embodiments, the carrier is a fixture. The plurality of carriers include target carriers. The target carriers herein refer to the target feeding positions of the cell feeding device and the connecting piece feeding device. That is, the plurality of carriers are arranged at different positions of the conveyor line 300, but the cell feeding device and the connecting piece feeding device do not feed the cells or the connecting pieces into any arbitrary carrier during feeding. Instead, the cell feeding device and the connecting piece feeding device feed the cells and the connecting pieces into set target carriers according to settings, such that the cells and the connecting pieces are welded in the same target carrier.

The cell feeding device 200 includes at least two cell feeding mechanisms. The at least two cell feeding mechanisms are respectively configured to feed at least two battery cell sets into at least two target carriers of the conveyor line 300. That is, each cell feeding mechanism is configured to feed one battery cell set into one target carrier. The cell feeding device 200 in the embodiments of the present application includes at least two cell feeding mechanisms; therefore, at least two battery cell sets are fed simultaneously. The connecting piece feeding device 100 is configured to feed the connecting piece into the at least two target carriers. In this way, each target carrier of the at least two target carriers accommodates one battery cell set and a connecting piece. In a specific embodiment, each target carrier accommodates two connecting pieces (e.g., a copper connecting piece and an aluminum connecting piece) therein, and the two connecting pieces are configured to respectively connect second tabs and first tabs of the at least two cells of the battery cell set.

Each battery cell set includes at least two cells. The number of cells included in each battery cell set is determined according to the capacity of the battery. In a specific embodiment, each battery cell set includes two cells.

The welding device 400 is configured to weld the connecting pieces and the at least two cells in the target carrier. The welding device 400 may be an ultrasonic welding device. The welding device 400 is configured to weld the connecting pieces and the tabs of the at least two cells.

The cell feeding device 200 of the battery welding apparatus in the embodiments of the present application includes at least two cell feeding mechanisms. In this way, at least two battery cell sets will be simultaneously fed into at least two target carriers of the conveyor line 300, and then the conveyor line 300 will sequentially convey the at least two target carriers loaded with the at least two battery cell sets to the position of the welding device 400, such that the at least two battery cell sets are allowed to be simultaneously welded by the welding device 400, thereby improving the welding efficiency. Moreover, the conveyor line 300 of the battery welding apparatus in the embodiments of the present application is provided with a plurality of carriers, such that the buffer capacity is increased, thereby improving the fault tolerance of the apparatus.

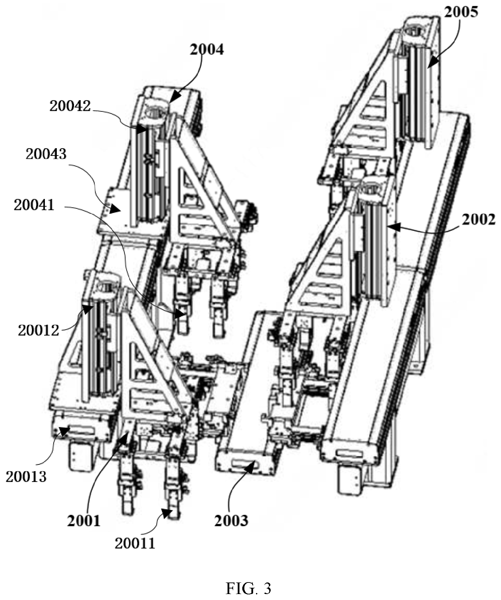

In some embodiments, referring to FIG. 3, the cell feeding device 200 includes a first cell feeding mechanism 2004 and a second cell feeding mechanism 2005. Furthermore, the first cell feeding mechanism 2004 and the second cell feeding mechanism 2005 each include a fixture, and the fixture is configured to clamp the cell.

Referring to FIG. 1, in some embodiments, the battery welding apparatus includes two welding devices spaced apart from each other in the conveying direction of the conveyor line 300, that is, a first welding device 400a and a second welding device 400b. The first welding device 400a is configured to weld first tabs of at least two cells, and the second welding device 400b is configured to weld second tabs of the at least two cells; the first tabs and the second tabs have opposite polarities.

That the two welding devices are spaced apart from each other in the conveying direction of the conveyor line 300 means that the two welding devices correspond to different positions of the conveyor line 300 and are both located on a lateral side of the conveyor line 300. In a specific embodiment, the first welding device 400a is a copper welding device configured to weld a copper connecting piece and the first tabs of the at least two cells. The second welding device 400b is an aluminum welding device configured to weld an aluminum connecting piece and the second tabs of the at least two cells.

The battery welding apparatus in the embodiments of the present application includes two welding devices spaced apart from each other in the conveying direction of the conveyor line 300, such that after the connecting pieces and the battery cell sets are fed onto the target carriers, the target carriers are conveyed forward by the conveyor line to be sequentially welded by the two welding devices, thereby further improving the welding efficiency.

In some embodiments, the two welding devices include a copper welding device and an aluminum welding device.

Referring to FIG. 1, the first welding device 400a is a copper welding device. The second welding device 400b is an aluminum welding device. The first welding device 400a is configured to weld a copper connecting piece and first tabs of at least two cells. The second welding device 400b is configured to weld an aluminum connecting piece and second tabs of the at least two cells.

The two welding devices in the embodiments of the present application include a copper welding device and an aluminum welding device. The copper welding device is configured to weld first tabs of at least two cells, and the aluminum welding device is configured to weld second tabs of the at least two cells, such that as long as a target carrier carrying the at least two cells is conveyed along the conveyor line, the connection of the at least two cells is achieved, thereby improving the efficiency.

In some embodiments, the connecting piece feeding device 100 is configured to feed two connecting pieces into each target carrier; one of the two connecting pieces is configured to connect to the first tabs of the at least two cells by the first welding device 400a, and the other of the two connecting pieces is configured to connect to the second tabs of the at least two cells by the second welding device 400b.

The connecting piece feeding device 100 is configured to convey a plurality of connecting pieces onto the conveyor line 300. For each target carrier, the connecting piece feeding device 100 places two connecting pieces inside the target carrier. Specifically, the two connecting pieces are a copper connecting piece and an aluminum connecting piece, respectively. That is, one battery cell set and two connecting pieces are correspondingly provided in each target carrier, and the battery cell set includes at least two cells, such that one connecting piece is configured to connect to the first tabs of the at least two cells, and the other connecting piece is configured to connect to the second tabs of the at least two cells.

The connecting piece feeding device 100 in the embodiments of the present application feeds two connecting pieces for each target carrier to respectively connect to positive electrodes and negative electrodes of the at least two cells, thereby achieving the grouping of the at least two cells, completing the feeding of the connecting pieces at one time, and improving the production efficiency.

In some embodiments, referring to FIG. 2, the connecting piece feeding device 100 includes a connecting piece conveying device 1001, a connecting piece storage device 1002, and a gripping device 1003. The connecting piece conveying device 1001 is configured to convey a plurality of connecting pieces onto the connecting piece storage device 1002. The gripping device 1003 is configured to grip the connecting pieces from the connecting piece storage device 1002 and place the connecting pieces into a target carrier.

In some embodiments, each welding device 400 includes a first welding assembly 410 and a second welding assembly 420 arranged adjacent to each other. The target carrier sequentially passes through the first welding assembly 410 and the second welding assembly 420 under the conveyance of the conveyor line, such that the first tabs and the second tabs of the at least two cells are each welded twice.

As shown in FIG. 1, the first welding device 400a includes two welding assemblies arranged adjacent to each other. The second welding device 400b also includes two welding assemblies arranged adjacent to each other. In this way, when the target carrier passes through the first welding device 400a under the conveyance of the conveyor line, the target carrier sequentially passes through the two welding assemblies for two welding operations. Specifically, the first tabs of the at least two cells and the connecting pieces first undergo a first welding performed by one welding assembly, and then undergo a second welding performed by the other welding assembly, such that the negative electrode of the battery is welded twice, thereby improving the welding yield and reducing the number of defective batteries caused by poor welding. Similarly, when the target carrier passes through the second welding device 400b under the conveyance of the conveyor line, the target carrier also sequentially passes through the two welding assemblies for two welding operations. Specifically, the second tabs of the at least two cells and the connecting pieces first undergo a first welding performed by one welding assembly, and then undergo a second welding performed by the other welding assembly, such that the positive electrode of the battery is welded twice, thereby improving the welding yield and reducing the number of defective batteries caused by poor welding.

In some embodiments, referring to FIG. 1, the first welding assembly 410 includes at least two independently arranged welding machines 411. The at least two welding machines 411 are arranged corresponding to at least two target carriers to weld at least two battery cell sets in the at least two target carriers, respectively.

In the specific embodiment shown in FIG. 1, the first welding assembly 410 includes two welding machines 411. Therefore, in the specific embodiment shown in FIG. 1, the cell feeding device 200 includes two cell feeding mechanisms, and the two cell feeding mechanisms feed the two battery cell sets into the two target carriers. Thus, the conveyor line will convey the two target carriers to the welding device 400. In this way, the two welding machines 411 correspond to the two target carriers, thereby welding cells and connecting pieces in the two target carriers, respectively. That is, one welding machine corresponds to one target carrier. In other embodiments not shown in the drawings, if the cell feeding device 200 includes a plurality of cell feeding mechanisms configured to feed a plurality of battery cell sets, then correspondingly, the first welding assembly 410 includes a plurality of welding machines 411. The plurality of welding machines 411 are configured to respectively weld the plurality of battery cell sets.

The first welding assembly 410 in the embodiments of the present application is provided with at least two welding machines corresponding to the number of the battery cell sets, such that after the conveyor line conveys the at least two battery cell sets to the welding device, the at least two welding machines will operate simultaneously to simultaneously perform a first welding on the at least two battery cell sets, thereby further improving the efficiency.

The second welding assembly 420 includes at least two independently arranged welding machines 411. The at least two welding machines 411 are arranged corresponding to at least two target carriers to weld at least two battery cell sets in the at least two target carriers, respectively. After the first welding assembly 410 completes the first welding on the battery cell sets, the battery cell sets are conveyed by the conveyor line to arrive at the position of the second welding assembly 420, such that the second welding assembly 420 performs a second welding on the battery cell sets. Similarly, since the second welding assembly includes at least two independently arranged welding machines 411, the second welding assembly will also operate simultaneously to simultaneously perform the second welding on the at least two battery cell sets, thereby further improving the efficiency.

In some embodiments, the conveyor line 300 includes an annular conveyor line.

In the battery welding device in the embodiments of the present application, the conveyor line 300 is configured into an annular shape, such that the connecting piece feeding device 100, the cell feeding device 200, and the welding device 400 are arranged at different positions of the conveyor line 300. In this way, the target carrier is docked with the plurality of devices under the conveyance of the conveyor line. The conveying direction of the conveyor line remains consistent, eliminating reciprocating motion during the manufacturing process and avoiding idle time caused by delayed process completion, thereby greatly improving efficiency. Moreover, compared with a linear conveyor line, configuring the conveyor line 300 as an annular conveyor line allows feeding, welding, and discharging to be realized in a smaller area, thereby reducing the volume of the battery welding device.

In some embodiments, the conveyor line 300 includes a first conveyor section 310 and a second conveyor section 320 arranged opposite to and spaced apart from each other, and a third conveyor section 330 for connecting the first conveyor section 310 and the second conveyor section 320. The battery welding apparatus includes two welding devices spaced apart from each other in the conveying direction of the conveyor line 300. The two welding devices are respectively configured to weld the first tabs and the second tabs of the at least two cells. One of the two welding devices is arranged on a lateral side of the first conveyor section 310, and the other of the two welding devices is arranged on a lateral side of the second conveyor section 320.

As shown in FIG. 1, the first conveyor section 310 extends in a first direction X, and the second conveyor section 320 also extends in the first direction X. The first conveyor section 310 and the second conveyor section 320 are arranged parallel to and spaced apart from each other. The third conveyor section 330 is arranged between the first conveyor section 310 and the second conveyor section 320, and the third conveyor section 330 extends in a second direction Y. The first direction X is perpendicular to the second direction Y. The first welding device 400a is arranged on a lateral side of the first conveyor section 310, and the second welding device 400b is arranged on a lateral side of the second conveyor section 320.

The third conveyor section 330 is arranged between the first conveyor section 310 and the second conveyor section 320, such that after the battery cell set undergoes welding by the first welding device 400a on the first conveyor section 310, the battery cell set is directly conveyed to the second conveyor section 320 by the third conveyor section 330 to undergo welding by the second welding device 400b. Such an arrangement ensures that the welding process of the battery cell set does not require transfer and requires only the control of the conveying action of the conveyor line 300, resulting in a simple control process.

In some embodiments, the conveyor line 300 further includes a fourth conveyor section 340 arranged opposite to the third conveyor section 330. The first conveyor section 310, the third conveyor section 330, the second conveyor section 320, and the fourth conveyor section 340 are sequentially connected to form a closed annular conveyor line. The conveyor line 300 forms a closed annular conveyor line, such that after a carrier carrying the battery cell set completes welding and is discharged, the empty carrier continues to be conveyed by the conveyor line back to a receiving position. Subsequently, the connecting piece feeding device 100 and the cell feeding device 200 continue to feed materials into the empty carrier, such that the battery welding apparatus in the embodiments of the present application is enabled to operate continuously, thereby improving the operation efficiency.

In some embodiments, the battery welding apparatus further includes a cell discharging device 600. The cell discharging device 600 is docked with the conveyor line 300 to discharge the welded battery cell set. In this way, the battery welding apparatus in the embodiments of the present application is enabled to cover the entire process of feeding, welding, and discharging.

As shown in FIG. 1, the cell discharging device 600 extends in the second direction Y. After the welding of the second tabs and the first tabs is completed, the battery cell set continues to be conveyed forward by the conveyor line 300, and after being conveyed to the position of the cell discharging device 600, the battery cell set is discharged by the cell discharging device 600. The arrangement of the cell discharging device 600 automates the discharging action of the battery welding apparatus.

In some embodiments, the battery welding apparatus includes at least two cell discharging devices. The at least two cell discharging devices are spaced apart from each other in the conveying direction of the conveyor line 300 to discharge the welded battery cell sets into at least two target carriers.

FIG. 1 illustratively shows that the battery welding apparatus includes a first cell discharging device 600a and a second cell discharging device 600b. The first cell discharging device 600a is configured to discharge the battery cell set in one target carrier, and the second cell discharging device 600b is configured to discharge the battery cell set in another target carrier.

The battery welding apparatus in the embodiments of the present application includes at least two target carriers. Therefore, the battery welding apparatus in the embodiments of the present application is provided with at least two cell discharging devices so that the battery cell sets in the at least two target carriers are all discharged under the conveyance of the conveyor line.

In some embodiments, the conveyor line includes a magnetic drive conveyor line. The magnetic drive conveyor line has the advantages of flexible, high-speed, and stable conveying. When applied in a product manufacturing process, the magnetic drive conveyor line significantly improves the product manufacturing efficiency.

In some embodiments, the conveyor line is configured to perform stepwise conveying in the conveying direction thereof. As used herein, the stepwise conveying of the conveyor line in the conveying direction thereof means that the conveyor line gradually advances by a set distance in the conveying direction. That is, the moving distance of each step is fixed. For example, the conveyor line may be a stepping conveyor line. The conveyor line of the present application is configured for stepwise conveying to enable the conveyor line to drive carriers thereon to move segment by segment by a fixed distance. Specifically, each time the conveyor line moves, all the carriers on the conveyor line move forward by two positions.

The conveyor line in the embodiments of the present application is configured for stepwise conveying, which is conducive to improving the control accuracy of the arrival position of the carriers.

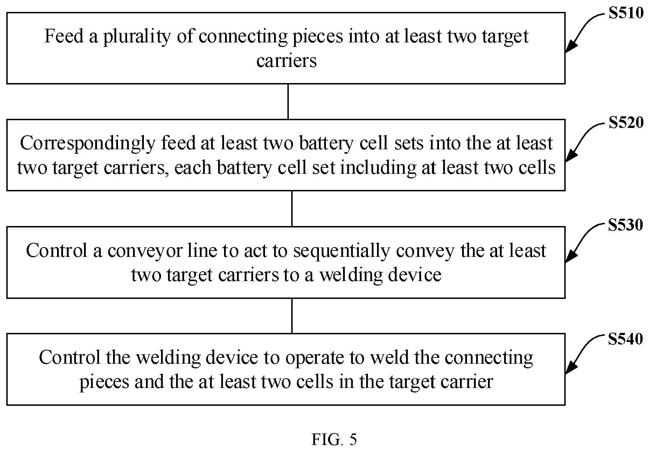

Referring to FIG. 5, the embodiments of the present application further provide a battery welding method. The battery welding method includes the following steps:

In S510, a plurality of connecting pieces are fed into at least two target carriers.

In S520, at least two battery cell sets are correspondingly fed into the at least two target carriers, each battery cell set including at least two cells.

In S530, a conveyor line 300 is controlled to convey the at least two target carriers to a welding device 400.

In S540, the welding device 400 is controlled to operate to weld the connecting pieces and the at least two cells in the target carrier.

According to the battery welding method in the embodiments of the present application, at least two battery cell sets are fed into at least two target carriers of the conveyor line 300, and then the conveyor line 300 sequentially conveys the at least two target carriers loaded with the at least two battery cell sets to the position of the welding device 400, such that the at least two battery cell sets are allowed to be sequentially welded by the welding device 400, thereby improving the welding efficiency.

In some embodiments, the battery welding method further includes: detecting, before controlling the conveyor line to act to convey the at least two target carriers to the welding device, whether a battery cell set is placed in the target carrier; and controlling, if it is detected that the battery cell set is placed in the target carrier, the conveyor line to act; or first controlling, if it is detected that no battery cell set is placed in the target carriers, a cell feeding mechanism to feed the battery cell set into the target carrier and then controlling the conveyor line 300 to convey the target carrier. Detecting whether the battery cell set is placed in the target carrier ensures that the battery cell set and the connecting piece simultaneously exist in the target carrier conveyed to the welding device, thereby ensuring the smooth progress of welding. In this way, repeated rework caused by missing placement is avoided, thereby improving the operation efficiency.

In some embodiments, the battery welding apparatus includes a first welding device 400a and a second welding device 400b spaced apart from each other in the conveying direction of the conveyor line 300. Controlling the conveyor line to convey the at least two target carriers to the welding device for welding, where the welding device 400 is configured to weld the connecting pieces and the at least two cells in the target carrier, includes: controlling the conveyor line to convey the at least two target carriers to the first welding device 400a and controlling the first welding device 400a to operate to weld first tabs of the at least two cells in the target carrier, and then controlling the conveyor line to convey the at least two target carriers to the second welding device 400b and controlling the second welding device 400b to operate to weld second tabs of the at least two cells in the target carrier.

Referring to FIG. 1, the target carrier is conveyed by the conveyor line 300 to first arrive at the first welding device 400a for the welding of the first tabs. After the welding is completed, the target carrier is conveyed by the conveyor line 300 to arrive at the second welding device 400b for the welding of the second tabs. After the welding of the tabs is completed, the battery cell set in the target carrier is discharged by a cell discharging device 600. Certainly, in some other embodiments, the target carrier may also be conveyed by the conveyor line 300 to first undergo the welding of the second tabs, and then conveyed by the conveyor line 300 to undergo the welding of the first tabs; the welding sequence of the tabs is not limited herein.

In some embodiments, each welding device 400 includes a first welding assembly 410 and a second welding assembly 420 arranged adjacent to each other; controlling the welding device 400 to operate to weld the connecting pieces and the at least two cells in the target carrier includes: controlling the target carrier to, under the conveyance of the conveyor line, sequentially pass through the first welding assembly 410 and the second welding assembly 420, such that the first tabs and/or the second tabs of the at least two cells are each welded twice.

According to the battery welding method in the embodiments of the present application, the first tabs and the second tabs of the battery cell set are each welded twice, thereby improving the welding yield and reducing the number of defective batteries caused by poor welding.

Hereinafter, with reference to FIGs. 1 to 4, the structure and operating process of a battery welding apparatus according to a specific embodiment of the present application will be described in detail.

As shown in FIG. 1, the battery welding apparatus in this embodiment includes a connecting piece feeding device 100, a cell feeding device 200, a conveyor line 300, a first welding device 400a, a second welding device 400b, a first cell discharging device 600a, and a second cell discharging device 600b.

The conveyor line 300 is an annular conveyor line, which includes a first conveyor section 310, a second conveyor section 320, a third conveyor section 330, and a fourth conveyor section 340. The first conveyor section 310 and the second conveyor section 320 are arranged parallel to and spaced apart from each other. The third conveyor section 330 is arranged between the first conveyor section 310 and the second conveyor section 320. The fourth conveyor section 340 is arranged between the second conveyor section 320 and the first conveyor section 310. In this way, the first conveyor section 310, the second conveyor section 320, the third conveyor section 330, and the fourth conveyor section 340 are sequentially connected to form a closed annular conveyor line.

The connecting piece feeding device 100, the cell feeding device 200, the first cell discharging device 600a, and the second cell discharging device 600b are respectively docked with different positions of the conveyor line 300 to achieve feeding and discharging.

In this embodiment, the connecting piece feeding device 100 is configured to feed connecting pieces into two target carriers among a plurality of carriers. Specifically, for each target carrier, the connecting piece feeding device 100 feeds two connecting pieces into the target carrier. The two connecting pieces include a first connecting piece and a second connecting piece. Specifically, the first connecting piece includes a copper connecting piece. The second connecting piece includes an aluminum connecting piece.

As shown in FIG. 2, the connecting piece feeding device 100 includes a connecting piece conveying device 1001, a connecting piece storage device 1002, a gripping device 1003, a positioning mechanism 1004, and a connecting piece feeding mechanism 1005. The connecting piece conveying device 1001 is configured to transfer a tray loaded with the copper connecting piece and the aluminum connecting piece to the connecting piece storage device 1002. The gripping device 1003 (e.g., a robot) takes one copper connecting piece and one aluminum connecting piece from the connecting piece storage device 1002 according to a preset path and places the copper connecting piece and the aluminum connecting piece onto the positioning mechanism 1004. Then, the positioning mechanism 1004 is controlled to move laterally, and the connecting piece feeding mechanism 1005 takes away the copper connecting piece and the aluminum connecting piece in the positioning mechanism 1004, moves laterally, and lowers the copper connecting piece and the aluminum connecting piece into the target carrier, thereby completing the connecting piece feeding process.

The cell feeding device 200 is configured to feed two battery cell sets into two target carriers among a plurality of carriers. Specifically, for each target carrier, the cell feeding device 200 feeds one battery cell set into the target carrier. Each battery cell set includes two cells. In this way, after both the connecting piece feeding device 100 and the cell feeding device 200 complete feeding, each target carrier carries two cells and two connecting pieces. The cell herein refers to an electrode assembly. Each cell includes a first tab and a second tab having opposite polarities.

As shown in FIG. 3, the cell feeding device 200 includes two cell feeding mechanisms. The two feeding mechanisms include a first cell feeding mechanism 2004 and a second cell feeding mechanism 2005. Specifically, the cell feeding device 200 further includes a first transfer mechanism 2001, a second transfer mechanism 2002, and a transfer platform 2003. The first transfer mechanism 2001 and the second transfer mechanism 2002 are configured to each take one cell from a feeding belt, and place the two cells onto the transfer platform 2003. The first cell feeding mechanism 2004 and the second cell feeding mechanism 2005 take away the cells on the transfer platform 2003 and place the cells into the target carrier loaded with the connecting pieces, thereby completing the cell feeding process.

Illustratively, the first transfer mechanism 2001 includes a transfer gripper 20011, a transfer lead screw 20012, and a transfer movement mechanism 20013. The transfer gripper 20011 is configured to grip the cell. The transfer gripper 20011 is connected to an output end of the transfer lead screw 20012. The transfer lead screw 20012 is connected to the transfer movement mechanism 20013. The transfer movement mechanism 20013 is capable of moving in an extension direction of the transfer platform. The transfer gripper 20011 is capable of ascending and descending under the drive of the transfer lead screw 20012, and the transfer lead screw 20012 is capable of moving in the extension direction of the transfer platform under the drive of the transfer movement mechanism 20013. With such a structure, after the transfer gripper 20011 grips the cell from the feeding belt, the transfer lead screw 20012 drives the transfer gripper 20011 to ascend, and then the transfer movement mechanism 20013 moves in the extension direction of the transfer platform to transfer the cell to a position above the transfer platform suitable for placement. The second transfer mechanism 2002 may be configured to have the same structure as the first transfer mechanism 2001.

Illustratively, the first cell feeding mechanism 2004 includes a feeding gripper 20041, a feeding lead screw 20042, and a feeding movement mechanism 20043. The feeding gripper 20041 is configured to grip the cell. The feeding gripper 20041 is connected to an output end of the feeding lead screw 20042. The feeding lead screw 20042 is connected to the feeding movement mechanism 20043. The feeding movement mechanism 20043 is capable of moving in a direction perpendicular to a moving direction of the target carrier. The feeding gripper 20041 is capable of ascending and descending under the drive of the feeding lead screw 20042, and the feeding lead screw 20042 is capable of moving in the direction perpendicular to the moving direction of the target carrier under the drive of the feeding movement mechanism 20043. With such a structure, after the feeding gripper 20041 grips the cell from the transfer platform, the feeding lead screw 20042 drives the feeding gripper 20041 to ascend, and then the feeding movement mechanism 20043 moves in the direction perpendicular to the moving direction of the target carrier to transfer the cell to a position above the target carrier, so as to place the cell into the target carrier loaded with the connecting piece. The second cell feeding mechanism 2005 may be configured to have the same structure as the first cell feeding mechanism 2004.

The first welding device 400a is configured to connect the two first tabs of the two cells using the first connecting piece, specifically, welding the first connecting piece and the two first tabs of the two cells. The second welding device 400b is configured to connect the two second tabs of the two cells using the second connecting piece, specifically, welding the second connecting piece and the two second tabs of the two cells.

After the connection of the two cells is completed, the target carrier continues to be conveyed by the conveyor line 300, and after the target carrier is conveyed to a position docked with the cell discharging device 600, the cell discharging device 600 discharges the welded battery cell set. Then, the empty carrier continues to be conveyed by the conveyor line 300 to return to the feeding position.

In this embodiment, two target carriers are provided on the conveyor line 300, such that during the conveyance by the conveyor line, the two target carriers will be simultaneously conveyed to the first welding device 400a. As shown in FIG. 1, the first welding device 400a includes four welding machines. Two of the four welding machines form a first welding assembly, and the other two of the four welding machines form a second welding assembly. After the two target carriers arrive at the first welding device 400a, the two target carriers are arranged corresponding to the two welding machines of the first welding assembly, such that the two welding machines of the first welding assembly perform a first welding on the first tabs of the battery cell sets and the connecting pieces in the two target carriers, respectively. After the first welding is completed, the conveyor line 300 continues to move forward by two positions, such that the two target carriers are allowed to be arranged corresponding to the two welding machines of the second welding assembly. In this way, the two welding machines of the second welding assembly perform a second welding on the first tabs of the battery cell sets and the connecting pieces in the two target carriers, respectively, thereby avoiding the problem of weak welding and improving the welding quality.

After the welding of the first tabs of the two battery cell sets is completed, the conveyor line 300 continues to move forward to drive the two target carriers to move through the third conveyor section 330 to the second welding device 400b. The second welding device 400b also includes four welding machines 411. Two of the four welding machines form a first welding assembly, and the other two of the four welding machines form a second welding assembly. The operating process of the second welding device is similar to the operating process of the first welding device 400a, which will not be described again herein. The difference is that the welding machines of the first welding device 400a perform welding on the two second tabs of the two cells of the battery cell set. Specifically, the welding machines of the first welding device 400a are all copper welding machines, and the welding machines of the second welding device 400b are all aluminum welding machines.

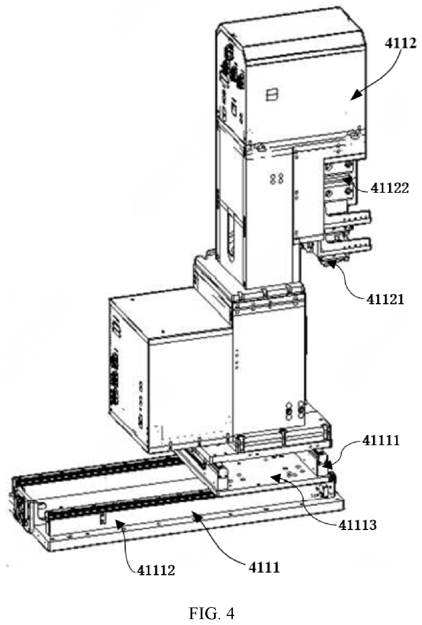

As shown in FIG. 4, the welding machine 411 includes a welding machine body 4112 and a moving device 4111. The moving device 4111 is configured to drive the welding machine body 4112 to move in the second direction Y. When the cells and the connecting pieces in the target carrier are welded, the moving device 4111 carries the welding machine body 4112 to move laterally to a welding position, and the welding machine body 4112 performs the welding operation; after the welding is completed, the moving device 4111 carries the welding machine body 4112 to move laterally to the initial position to wait for the next welding instruction. The plurality of welding machines have the same structure.

Illustratively, the moving device 4111 includes a first guide rail 41111, a second guide rail 41112, and a carrying seat 41113. The carrying seat 41113 is movably connected to the second guide rail 41112. The first guide rail 41111 is fixed to the carrying seat 41113. The welding machine body 4112 is movably connected to the first guide rail 41111. An extension direction of the first guide rail 41111 is perpendicular to an extension direction of the second guide rail 41112.

The first guide rail 41111 is fixed to the carrying seat 41113, and the carrying seat 41113 is movably connected to the second guide rail 41112, such that the first guide rail 41111 on the carrying seat 41113 moves in the extension direction of the second guide rail 41112, allowing the welding machine body 4112 to move in the extension direction of the second guide rail 41112. Since the welding machine body 4112 is movably connected to the first guide rail 41111, the welding machine body 4112, in addition to moving in the extension direction of the second guide rail 41112, also moves in the extension direction of the first guide rail 41111.

The extension direction of the first guide rail 41111 is configured to be perpendicular to the extension direction of the second guide rail 41112, such that the welding machine body 4112 moves in two mutually perpendicular directions, thereby allowing the welding machine body 4112 to have good flexibility and facilitating the improvement in the convenience of welding.

Illustratively, the welding machine body 4112 includes a welding head 41121 and a telescopic cylinder 41122. The welding head 41121 is connected to an output end of the telescopic cylinder 41122, such that the welding head 41121 moves under the drive of the telescopic cylinder 41122. An expansion and contraction direction of the telescopic cylinder 41122 is configured to be perpendicular to the extension direction of the second guide rail 41112 and the extension direction of the first guide rail 41111, such that the welding head 41121 moves in three mutually perpendicular directions, allowing the welding head 41121 to have good flexibility when performing welding.

A plurality of carriers are provided on the conveyor line 300. The carriers are configured to carry and place battery cell sets and connecting pieces to be welded. In a specific embodiment, the conveyor line 300 is a magnetic drive circulation line assembly, and eleven sets of carriers are provided on the conveyor line 300. One side of the first conveyor section 310 is a feeding side for connecting pieces and cells. Two carriers form one set. With each forward movement by the magnetic drive, all the carriers on the conveyor line 300 move forward by two positions. After the feeding of the connecting pieces and the batteries is completed, the carriers are magnetically driven forward to the first welding device 400a to complete two copper welding operations. The two carriers, having completed the copper welding, are moved from the third conveyor section 330 to the second conveyor section 320, and the second welding device 400b performs an aluminum welding operation.

As shown in FIG. 1, two carriers, after completing the welding operation, are magnetically driven forward to the discharging position. The first cell discharging device 600a transfers the battery cell set in one carrier to a downstream station to complete the battery transfer discharging process. The empty carrier and another fully-loaded carrier are then moved by the fourth conveyor section 340 to another discharging position. The second cell discharging device 600b transfers the cell in the other carrier to a downstream station to complete the discharging process. The empty carriers, after completing the discharging process, continue to move forward along with the conveyor line 300 to perform a new round of the feeding process.

The battery welding device in this embodiment realizes the functions of feeding cells from the feeding belt, completing the welding requirements, and finally circulating and discharging the cells. The specific process is as follows: As shown in FIGs. 1 and 2, first, the connecting piece feeding device 100 transfers the connecting pieces, after secondary positioning, from a connecting piece feeding tray to two target carriers on the conveyor line 300, and then the cell feeding device 200 places two battery cell sets on a feeding assembly line into the two target carriers on the conveyor line 300. The conveyor line 300 is responsible for transferring the target carriers loaded with the connecting pieces and the battery cell sets to sequentially advance by two carrier positions for copper welding, and continues to convey the target carriers forward for aluminum welding. After completion, the target carriers loaded with the battery cell sets are conveyed by the conveyor line 300 to a discharging position for a discharging process, and the empty carriers, after completing the discharging process, are transported by the conveyor line 300 to a connecting piece feeding position for a new round of action process.

In the cell feeding device 200 of this embodiment, a total of two sets of cell feeding mechanisms are designed, which are capable of simultaneously processing two battery cell sets, that is, four batteries, thereby improving the processing capacity, accelerating the production efficiency, and increasing the production output of the apparatus.

Additionally, for the connection between each battery cell set and the connecting pieces, copper welding and aluminum welding are both performed twice, which improves the welding yield and reduces the number of NG batteries caused by poor welding. Moreover, a total of eleven sets of carriers are designed for the conveyor line 300, allowing a maximum simultaneous buffering of up to eleven sets, namely twenty-two batteries, thereby increasing the buffer capacity and providing the fault tolerance of the apparatus.

Although the present application has been described with reference to preferred embodiments, various modifications will be made, and components may be replaced with equivalents without departing from the scope of the present application. In particular, the technical features mentioned in the embodiments may be combined in any manner, provided that there is no structural conflict. The present application is not limited to the specific embodiments disclosed herein, but encompasses all technical solutions falling within the scope of the claims.

## Claims

1. A battery welding apparatus, comprising:
a conveyor line, comprising a plurality of carriers arranged in a conveying direction of the conveyor line;
a cell feeding device, comprising at least two cell feeding mechanisms, wherein the at least two cell feeding mechanisms are respectively configured to feed at least two battery cell sets into at least two target carriers of the conveyor line, and each of the battery cell sets comprises at least two cells;
a connecting piece feeding device, configured to feed connecting pieces into the at least two target carriers; and
a welding device, arranged on a lateral side of the conveyor line, wherein the conveyor line is movably arranged to sequentially convey the at least two target carriers to the welding device for welding, and the welding device is configured to weld the connecting pieces and the at least two cells in the target carrier.

2. The battery welding apparatus according to claim 1, wherein the battery welding apparatus comprises two welding devices spaced apart from each other in the conveying direction of the conveyor line, and the two welding devices comprise a first welding device and a second welding device; the first welding device is configured to weld first tabs of the at least two cells, the second welding device is configured to weld second tabs of the at least two cells, and the first tabs and the second tabs have opposite polarities.

3. The battery welding apparatus according to claim 2, wherein the first welding device comprises a copper welding device; and/or, the second welding device comprises an aluminum welding device.

4. The battery welding apparatus according to claim 2 or 3, wherein the connecting piece feeding device is configured to feed two connecting pieces into each target carrier; one of the two connecting pieces is configured to connect to the first tabs of the at least two cells by the first welding device, and the other of the two connecting pieces is configured to connect to the second tabs of the at least two cells by the second welding device.

5. The battery welding apparatus according to any one of claims 2 to 4, wherein each of the welding devices comprises a first welding assembly and a second welding assembly arranged adjacent to each other, and the target carrier sequentially passes through the first welding assembly and the second welding assembly under the conveyance of the conveyor line, such that the first tabs and the second tabs of the at least two cells are each welded twice.

6. The battery welding apparatus according to claim 5, wherein the first welding assembly comprises at least two independently arranged welding machines, and the at least two welding machines are arranged corresponding to the at least two target carriers to weld the at least two battery cell sets in the at least two target carriers, respectively; and/or,
the second welding assembly comprises at least two independently arranged welding machines, and the at least two welding machines are arranged corresponding to the at least two target carriers to weld the at least two battery cell sets in the at least two target carriers, respectively.

7. The battery welding apparatus according to claim 6, wherein the welding machine comprises a welding machine body and a moving device; the welding machine body is connected to the moving device, and the moving device is configured to drive the welding machine body to move.

8. The battery welding apparatus according to claim 7, wherein a moving direction of the welding machine body is perpendicular to the conveying direction of the conveyor line.

9. The battery welding apparatus according to claim 7, wherein the moving device is configured to drive the welding machine body to move reciprocatingly between an initial position and a welding position.

10. The battery welding apparatus according to claim 7, wherein the moving device comprises a first guide rail, a second guide rail, and a carrying seat; the carrying seat is movably connected to the second guide rail, and the first guide rail is fixed to the carrying seat; the welding machine body is movably connected to the first guide rail, and an extension direction of the first guide rail is perpendicular to an extension direction of the second guide rail.

11. The battery welding apparatus according to any one of claims 1 to 10, wherein the conveyor line comprises an annular conveyor line.

12. The battery welding apparatus according to claim 11, wherein the conveyor line comprises a first conveyor section and a second conveyor section arranged opposite to and spaced apart from each other, and a third conveyor section for connecting the first conveyor section and the second conveyor section; the battery welding apparatus comprises two welding devices spaced apart from each other in the conveying direction of the conveyor line; the two welding devices are respectively configured to weld first tabs and second tabs of the at least two cells; one of the two welding devices is arranged on a lateral side of the first conveyor section, and the other of the two welding devices is arranged on a lateral side of the second conveyor section.

13. The battery welding apparatus according to claim 12, wherein the conveyor line further comprises a fourth conveyor section arranged opposite to the third conveyor section; the first conveyor section, the third conveyor section, the second conveyor section, and the fourth conveyor section are sequentially connected to form a closed annular conveyor line.

14. The battery welding apparatus according to any one of claims 1 to 13, wherein the battery welding apparatus further comprises a cell discharging device, and the cell discharging device is docked with the conveyor line to discharge a welded battery cell set.

15. The battery welding apparatus according to claim 14, wherein the battery welding apparatus comprises at least two cell discharging devices, and the at least two cell discharging devices are spaced apart from each other in the conveying direction of the conveyor line to discharge welded battery cell sets in the at least two target carriers.

16. The battery welding apparatus according to any one of claims 1 to 15, wherein in the conveying direction of the conveyor line, the cell discharging device is located upstream of the cell feeding device and the connecting piece feeding device.

17. The battery welding apparatus according to claim 16, wherein the at least two cell discharging devices comprise a first cell discharging device and a second cell discharging device spaced apart from each other in the conveying direction of the conveyor line; the at least two target carriers comprise a first target carrier and a second target carrier spaced apart from each other in the conveying direction of the conveyor line; the first cell discharging device is configured to discharge the cells in the first target carrier, and the second cell discharging device is configured to discharge the cells in the second target carrier.

18. The battery welding apparatus according to any one of claims 1 to 17, wherein the connecting piece feeding device comprises a connecting piece conveying device, a connecting piece storage device, and a gripping device; the connecting piece conveying device is configured to convey a plurality of connecting pieces onto the connecting piece storage device, and the gripping device is configured to grip a connecting piece from the connecting piece storage device and place the connecting piece into the target carrier.

19. The battery welding apparatus according to claim 18, wherein the connecting piece feeding device further comprises a positioning mechanism and a connecting piece feeding mechanism; the gripping device is capable of placing the connecting piece into the positioning mechanism, and the connecting piece feeding mechanism is configured to lower the connecting piece in the positioning mechanism into the target carrier.

20. The battery welding apparatus according to any one of claims 1 to 19, wherein the conveyor line comprises a magnetic drive conveyor line.

21. The battery welding apparatus according to any one of claims 1 to 20, wherein the cell feeding device comprises a first transfer mechanism, a second transfer mechanism, and a transfer platform; the first transfer mechanism and the second transfer mechanism are each configured to place cells onto the transfer platform, and the cell feeding mechanism is configured to place the cells on the transfer platform into the target carrier.

22. The battery welding apparatus according to any one of claims 1 to 21, wherein the at least two cell feeding mechanisms comprise a first cell feeding mechanism and a second cell feeding mechanism, and the first cell feeding mechanism and the second cell feeding mechanism each place the two cells on the transfer platform into the target carrier.

23. A battery welding method based on the battery welding apparatus according to claim 1, comprising the following steps:
feeding a plurality of connecting pieces into at least two target carriers;
correspondingly feeding at least two battery cell sets into at least two target carriers, each battery cell set comprising at least two cells;
controlling the conveyor line to act to sequentially convey the at least two target carriers to a welding device; and
controlling the welding device to operate to weld the connecting pieces and the at least two cells in the target carrier.

24. The battery welding method according to claim 23, wherein the battery welding method further comprises: detecting, before controlling the conveyor line to act to convey the at least two target carriers to the welding device, whether a battery cell set is placed in the target carrier; and controlling, if it is detected that the battery cell set is placed in the target carrier, the conveyor line to act; or first controlling, if it is detected that no battery cell set is placed in the target carrier, a cell feeding mechanism to feed the battery cell set into the target carrier and then controlling the conveyor line to convey the target carrier.

25. The battery welding method according to claim 23 or 24, wherein the battery welding apparatus comprises a first welding device and a second welding device spaced apart from each other in a conveying direction of the conveyor line, and controlling the conveyor line to convey the at least two target carriers to the welding device for welding, wherein the welding device is configured to weld the connecting pieces and the at least two cells in the target carrier, comprises: controlling the conveyor line to convey the at least two target carriers to the first welding device and controlling the first welding device to operate to weld first tabs of the at least two cells in the target carrier, and then controlling the conveyor line to convey the at least two target carriers to the second welding device and controlling the second welding device to operate to weld second tabs of the at least two cells in the target carrier.

26. The battery welding method according to any one of claims 23 to 25, wherein each of the welding devices comprises a first welding assembly and a second welding assembly arranged adjacent to each other, and controlling the welding device to operate to weld the connecting pieces and the at least two cells in the target carrier comprises: controlling the target carrier, under the conveyance of the conveyor line, to sequentially pass through the first welding assembly and the second welding assembly, such that first tabs and/or second tabs of the at least two cells are each welded twice.
